# EUROPÄISCHE PATENTSCHRIFT

(11) **EP 0 680 669 B1**
(45) Veröffentlichungstag und Bekanntmachung des Hinweises auf die Patenterteilung: **11.06.1997**
(21) Anmeldenummer: 94905097.5
(22) Anmeldetag: 20.01.1994
(51) Int. Cl.: H02K 23/04, H02K 5/24, H02K 5/04

(54) **ELEKTROMOTOR FÜR HILFSEINRICHTUNGEN AN KRAFTFAHRZEUGEN**
ELECTRIC MOTOR FOR ANCILLIARIES IN MOTOR VEHICLES
MOTEUR ELECTRIQUE POUR EQUIPEMENTS AUXILIAIRES MONTES DANS DES AUTOMOBILES

(30) Priorität: 23.01.1993 DE 4301744
(43) Veröffentlichungstag der Anmeldung: 08.11.1995
(73) Patentinhaber: ITT Automotive Europe GmbH, 60488 Frankfurt (DE)
(72) Erfinder: LACK, Peter, D-73614 Schorndorf (DE); PHILIPPS, Werner, D-71638 Ludwigsburg (DE)
(86) Internationale Anmeldenummer: EP9400136
(87) Internationale Veröffentlichungsnummer: WO9417301

(56) Entgegenhaltungen:
- EP-A- 0 176 839
- FR-A- 2 255 737
- GB-A- 2 111 763
- US-A- 3 527 969
- US-A- 3 663 851
- ELEKTROTECHNIK, Bd.69, Nr.16, 14. Oktober 1987, WURZBURG DE Seiten 24 - 30 K.H.JACOBI 'es geht noch leiser'

## Beschreibung

Die Erfindung betrifft einen Elektromotor mit einem mehrnutigen Rotor und einem in einem Gehäuse untergebrachten mehrpoligen Stator, dessen Statorpole sich in Richtung der Rotorachse erstrecken, während die Rotornuten mit Bezug auf die Rotorachse schräg verlaufen.

In der DE 25 56 240 ist eine Antriebsvorrichtung für Hilfseinrichtungen an Kraftfahrzeugen, z. B. Scheibenwischer, beschrieben. Die Ankernuten verlaufen hierbei schräg zur Motorachse. Dies führt zur Verminderung des Rastmoments und ruhigerem Lauf des Motors. Andererseits ist bekannt, daß der Lauf des Motors Geräusche hervorruft, die zum einen durch die Umdrehungen des Ankers und zum anderen durch die Eigenschwingungen des Stators hervorgerufen und als störend empfunden werden.

Ausgehend vom obigen Stand der Technik liegt der Erfindung die Aufgabe zugrunde, hier Abhilfe zu schaffen und einen Elektromotor mit besonders ruhigem Lauf vorzuschlagen.

Die gestellte Aufgabe wird erfindungsgemäß dadurch gelöst, daß die Statormagnete mit der Innenwand des Gehäuses durch Kleben verbunden sind, daß das Gehäuse eine schalldämmende Wandstärke aufweist bzw. zumindest teilweise aus schalldämmendem Werkstoff besteht und daß die Schrägung der Rotornuten 8 bis 20° beträgt.

Der tragende Gedanke der Erfindung, nämlich die Motorgeräuschdämmung, ergibt sich durch die Kombination von Motorgehäusedicke, Magnetverklebung und Nutschrägung. Bei optimaler Wahl einzelner Parameter wird ein besonders ruhiger und geräuscharmer Lauf eines Elektromotors gewährleistet.

Weitere zweckmäßige und vorteilhafte Ausgestaltungen der Erfindung gehen aus den Unteransprüchen hervor.

Eine besonders zweckmäßige Ausgestaltung sieht im Hinblick auf die Anbringung der Statormagnete vor, daß die Statormagnete mit der Innenwand des Gehäuses partiell oder ganzflächig verbunden sind. Ferner haben Versuche gezeigt, daß eine gute Motorgeräuschdämmung schon dann erreichbar ist, wenn die Wandstärke des Gehäuses mindestens 2 mm beträgt. Durch eine weitere Erhöhung der Wandstärke wird zwar die Motorgeräuschdämmung noch erhöht, dies kann jedoch zur Erhöhung des Gewichtes des Motors führen, was andererseits unerwünscht ist. Um auch bei relativ großen Wandstärken ein geringes Gesamtgewicht des Motors zu gewährleisten, sieht eine weitere zweckmäßige Ausgestaltung der Erfindung vor, daß das Gehäuse aus einem Grundkörper, der die Statormagneten trägt, und einer außenseitigen Ummantelung aus schalldämmendem Werkstoff besteht. Hierbei ist es zweckmäßig, wenn die Ummantelung als ein Nachrüstteil ausgebildet und mit dem Grundkörper lösbar verbindbar ist. Der aus Kunststoff bestehende Werkstoff kann mit dem Grundkörper auch fest und unlösbar verbunden sein. Für diese Zwecke sind besonders gut Schaumstoffkunststoffe geeignet, da sie zum einen einen besonders hohen Geräuschdämmungskoeffizienten aufweisen und zum anderen haben sie auch ein relativ geringes Gewicht, so daß das Gewicht der Ummantelung nur einen Bruchteil des Gesamtgewichtes des Motors aufweist.

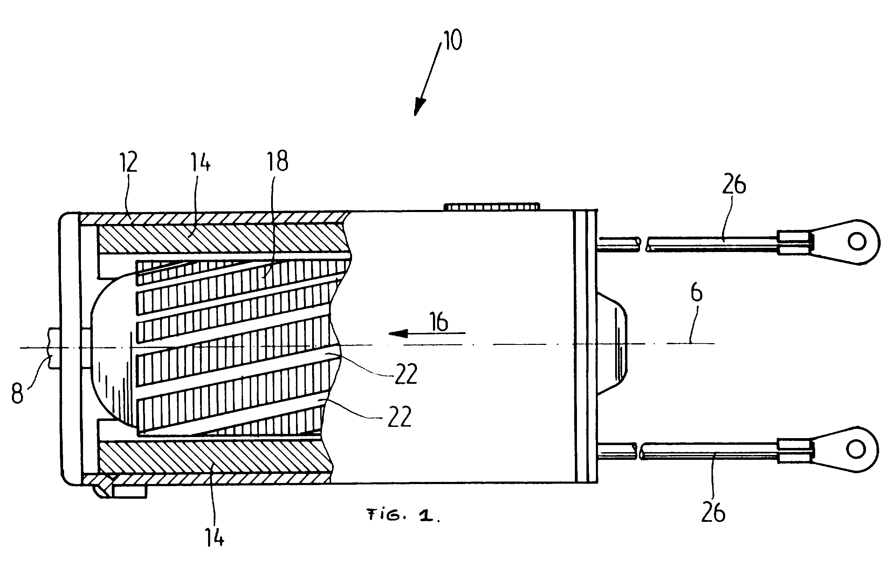

Ein Ausführungsbeispiel der Erfindung ist in der Zeichnung schematisch dargestellt und wird im folgenden näher erläutert.

In der Zeichnung ist ein Elektromotor 10 in Seitenansicht und teilweise geschnitten dargestellt. Der Elektromotor 10 weist einen mehrnutigen Rotor 16 und einen in einem Gehäuse 12 untergebrachten Stator auf, dessen Statorpole 14 sich in Richtung der Rotorachse 6 erstrecken, während die Rotornuten 22 mit Bezug auf die Rotorachse 6 schräg verlaufen. Die Statormagneten 14 sind mit der Innenwand des Gehäuses 12 durch Kleben verbunden. Die Wandstärke des Gehäuses 12 ist so gewählt, daß sie zum einen die erforderliche Festigkeit aufweist und zum anderen schalldämmend ausgebildet ist. Im vorliegenden Ausführungsbeispiel beträgt die Wandstärke des Gehäuses etwa 2 mm, wobei 2,5 mm als besonders günstig angesehen werden. Um die Motorgeräuschdämmung noch zu erhöhen, kann die Außenwand des Gehäuses 12 mit einer weiteren, nicht dargestellten, Ummantelung versehen werden, die vorzugsweise aus Kunststoff besteht und als ein Nachrüstteil ausgebildet ist. Die Ummantelung ist vorzugsweise aus Kunststoffschaumstoff hergestellt, so daß das Gesamtgewicht des Motors kaum erhöht wird. Die Statormagneten 14 sind mit der Innenwand des Gehäuses 12 ganzflächig verbunden, sie könnten jedoch auch partiell verbunden sein.

Ferner läßt die Zeichnung erkennen, daß der Rotor 16 eine Welle 8 hat, die z. B. mit einem nicht dargestellten Scheibenwischergetriebe betriebsgemäß verbunden sein kann. Der Elektromotor wird über Leitungen 26 mit elektrischem Strom versorgt.

## Patentansprüche

1. Elektromotor (10) mit einem mehrnutigen Rotor (16) und einem in einem Gehäuse (12) untergebrachten mehrpoligen Stator, dessen Statorpole (14) sich in Richtung der Rotorachse (6) erstrecken, während die Rotornuten (22) mit Bezug auf die Rotorachse (6) schräg verlaufen,
dadurch gekennzeichnet,
daß die Statormagneten (14) mit der Innenwand des Gehäuses (12) durch Kleben verbunden sind, daß das Gehäuse (12) eine schalldämmende Wandstärke aufweist bzw. zumindest teilweise aus schalldämmendem Werkstoff besteht und daß die Schrägung der Rotornuten (22) 8 bis 20° beträgt.

2. Elektromotor nach Anspruch 1,
dadurch gekennzeichnet,
daß die Statormagneten (14) mit der Innenwand des Gehäuses (12) partiell oder ganzflächig verbunden sind.

3. Elektromotor nach Anspruch 1 oder 2,
dadurch gekennzeichnet,
daß die Wandstärke des Gehäuses (12) mindestens 2 mm beträgt.

4. Elektromotor nach Anspruch 3,
dadurch gekennzeichnet,
daß die Wandstärke vorzugsweise 2,5 mm beträgt.

5. Elektromotor nach einem der Ansprüche 1 bis 4,
dadurch gekennzeichnet,
daß das Gehäuse (12) aus einem Grundkörper, der die Statorpole (14) trägt, und einer außenseitigen Ummantelung aus schalldämmendem Werkstoff besteht.

6. Elektromotor nach Anspruch 5,
dadurch gekennzeichnet,
daß die Ummantelung als ein Nachrüstteil ausgebildet und mit dem Grundkörper lösbar verbindbar ist.

7. Elektromotor nach einem der Ansprüche 1 bis 6,
dadurch gekennzeichnet,
daß die Ummantelung aus Kunststoff besteht.

## Claims

1. An electric motor (10) including a multi-slot rotor (16) and a multi-pole stator, wherein the stator is accommodated in a housing (12) and the poles (14) of the stator extend in parallel to the direction of the rotor axis (6), while the rotor slots (22) run helically with respect to the rotor axis (6),
characterized in that the stator magnets (14) are connected with the inside wall of the housing (12) by cementing, in that the housing (12) features a sound-insulating wall thickness or rather, at least partially, consists of a sound-insulating material, and in that the helix angle of the rotor slots (22) is 8 to 20°.

2. An electric motor as claimed in claim 1,
characterized in that the stator magnets (14) are connected partially or over their entire surface with the inside wall of the housing (12).

3. An electric motor as claimed in claim 1 or in claim 2,
characterized in that the wall thickness of the housing (12) is at least 2 mm.

4. An electric motor as claimed in claim 3,
characterized in that the wall thickness is preferably 2.5 mm.

5. An electric motor as claimed in any one of claims 1 through 4,
characterized in that the housing (12) includes a basic body carrying the stator poles (14), and an outside casing of sound-insulating material.

6. An electric motor as claimed in claim 5,
characterized in that the casing is designed as an add-on component and is detachably connectable with the basic body.

7. An electric motor as claimed in any one of claims 1 through 6,
characterized in that the casing is of plastic material.

## Revendications

1. Moteur électrique (10) comprenant un rotor multirainuré (16) et un stator multipolaire, monté dans un boîtier (12), dont les pôles de stator (14) sont orientés suivant la direction de l'axe de rotor (6), tandis que les rainures de rotor (22) sont orientées d'une manière inclinée vis-à-vis de l'axe de rotor (6), caractérisé en ce que les aimants de stator (14) sont rendus solidaires de la paroi intérieure du boîtier (12) par collage, en ce que le boîtier (12) comporte une épaisseur de paroi créant une isolation acoustique ou est constitué au moins partiellement d'une matière d'isolation acoustique et en ce que l'inclinaison des rainures de rotor (22) est comprise entre 8 et 20°.

2. Moteur électrique selon la revendication 1, caractérisé en ce que les aimants de stator (14) sont solidaires, partiellement ou suivant toute leur surface, de la paroi intérieure du boîtier (12).

3. Moteur électrique selon la revendication 1 ou 2, caractérisé en ce que l'épaisseur de paroi du boîtier (12) est au moins égale à 2 mm.

4. Moteur électrique selon la revendication 3, caractérisé en ce que l'épaisseur de paroi est de préférence égale à 2,5 mm.

5. Moteur électrique selon l'une des revendications 1 à 4, caractérisé en ce que le boîtier (12) soit est constitué d'un corps de base, qui porte les pôles de stator (14), et d'une enveloppe en matière d'isolation acoustique qui est disposée à l'extérieur.

6. Moteur électrique selon la revendication 5, caractérisé en ce que l'enveloppe est réalisée sous forme d'une pièce rapportée après coup et soit est agencée de façon à pouvoir être rendue solidaire du corps de base d'une manière amovible.

7. Moteur électrique selon l'une des revendications 1 à 6, caractérisé en ce que l'enveloppe est en matière plastique.
